# EUROPÄISCHE PATENTSCHRIFT

(11) **EP 2 095 683 B1**
(45) Veröffentlichungstag und Bekanntmachung des Hinweises auf die Patenterteilung: **25.01.2017**
(21) Anmeldenummer: 06818481.1
(22) Anmeldetag: 10.11.2006
(51) Int. Cl.: H05B 3/26, F24D 13/02

(54) **BEHEIZBARES BELAGSYSTEM**
HEATABLE COVERING SYSTEM
SYSTÈME DE REVÊTEMENT CHAUFFABLE

(43) Veröffentlichungstag der Anmeldung: 02.09.2009
(73) Patentinhaber: Kronoplus Technical AG, 9052 Niederteufen (CH)
(72) Erfinder: DÖHRING, Dieter, 01561 Zabeltitz (DE); MACHER, David, 8570 Voitsberg (AT); KREMER, Gerhard, 8280 Fürstenfeld (AT)
(74) Vertreter: Heselberger, Johannes
(86) Internationale Anmeldenummer: PCT/EP2006/010822
(87) Internationale Veröffentlichungsnummer: WO 2008/055535

(56) Entgegenhaltungen:
- EP-A1- 0 641 845
- WO-A-02/31290
- WO-A-2004/099530
- WO-A1-96/26984
- DE-A1- 1 940 702
- DE-A1- 10 052 345
- GB-A- 2 184 740
- JP-A- 10 274 420
- US-A- 4 814 580
- US-A- 5 968 420

## Beschreibung

Die vorliegende Erfindung ein beheizbares Belagsystem für Fußböden, Decken und Wände nach dem Oberbegriff des Anspruchs 1.

Zur Beheizung von Fußbodenflächen sind aus dem Stand der Technik verschiedene Verfahren bekannt. Eine weitverbreitete Fußbodenheizung besteht aus einer Anzahl von Leitungen oder Rohren, die mäanderformig über einen Boden verlegt sind und durch die eine Heizflüssigkeit, in der Regel heißes Wasser, strömt. Auf diese Heizrohre oder Schläuche wird der eigentliche Bodenbelag, wie zum Beispiel ein Parkett oder Fliesenboden, verlegt und durch die heißen Leitungen erwärmt.

Fußbodenheizungen sind Flächenheizungen, die eine gleichmäßige und damit angenehme Wärmeverteilung ermöglichen. Herkömmliche Fußbodenheizungen wie die oben beschriebenen sind jedoch sowohl vom Materialaufwand als auch hinsichtlich ihrer Verlegung sehr aufwendig und können in der Regel nur von entsprechend geschulten Fachleuten installiert werden.

Aus dem europäischen Patent EP 105 5 087 B1 ist ein beheizbares Belagsystem für Fußböden bekannt, das aus einer Anzahl von Metallplatten besteht, in die Kanäle eingearbeitet sind. Die Metallplatten werden so auf einem Boden verlegt, dass die Kanäle untereinander verbunden sind. In diese Kanäle wird dann ein Heizkabel mäanderformig eingelegt. Das Heizkabel ist selbstregulierend und mit einem integrierten Temperaturschutz versehen, um die Gefahr übermäßiger Erhitzung zu beseitigen. Auf die Metallplatten und das Heizkabel, das in den Kanälen innerhalb der Platten verläuft, kann dann ein herkömmlicher Fußbodenbelag, wie z.B. Keramikfliesen, verlegt werden.

Aus dem US Patent Nr. 6, 737,611 B2 ist eine elektrisch leitende, thermoplastische Matte bekannt, die sich bei Anlegen einer Spannung selbst erhitzt. Die Matte besteht aus einem semikristallinen Polymer und einem elektrisch leitfähige Füllmaterial und kann aufgrund ihrer geringen Dicke unterhalb eines Fußbodenbelags verlegt werden. Die Heizmatte ist biegsam und wird im zusammengerollten Zustand angeboten. Beim Verlegen der Heizmatte muss diese lediglich über einem Boden abgerollt und entsprechend fixiert und elektrisch angeschlossen werden.

Insbesondere sind aus WO 2004/099 530 A1 Fußbodenpaneele mit Heizfolie bekannt. Aus DE 100 52 345 A1 sind wetterfeste Bodenmatten mit elektrischer Beheizung bekannt, umfassend einen plattenartigen Träger aus (vorzugsweise flexiblem) Kunststoff oder Gummi, in welchem Träger (zumindest) ein Heizdraht eingelagert ist. Die WO 02/31 290 A1 offenbart eine Belagsplatte zur Verlegung in geschlossenen Räumen und insbesondere, aber nicht ausschließlich, zur Verlegung in sogenannten Nassräumen, wie Bädern, Toiletten, Kellern, aber auch Vorräumen, Wintergärten, und Veranden, umfassend Heizplatten. US4814580 offenbart thermische Gehweg-Ziegel, aufweisend ein Heizelement, welches darin eingebettet ist. DE 21 43 710 und DE 19 40 702 A1 betreffen elektrische Fußboden- und/oder Wandheizungen.

Aus der US 3,594,545 sind Strahlungswärme-Panel, bestehend aus zwei Gipsbauplatten bekannt, wobei an eine Platte ein elektrisch leitendes Papierblatt befestigt ist.
WO 96/26984 offenbart elektrisch leitfähige pastöse oder flüssige Oberflächenbeschichtungsmaterialien, welche besonders für die Strahlungsheizung geeignet sind. Die DE 1 816 641 betrifft eine Fußbodenelektrospeicherheizung mit auf Isolierträgern aufgebrachten Heizleitern und betrifft eine Heizvorrichtung für ein Flugzeug.

Eine Aufgabe der Erfindung besteht darin, ein beheizbares Belagsystem für Fußböden, Decken und Wände bereitzustellen bei dem die Belagplatten mit elektrischen Heizmitteln versehen sind. Weiter ist es eine Aufgabe der Erfindung derartige mit elektrischen Heizmitteln versehenden Belagplatten einfach elektrisch miteinander verbinden zu können.

Diese und andere Aufgaben, die beim Lesen der folgenden Beschreibung noch genannt werden oder vom Fachmann erkannt werden können, werden mit einem beheizbaren Belagsystem nach Anspruch 1 gelöst.

In einer Ausführungsform umfasst das beheizbare Belagsystem für Fußböden, Decken und Wände Belagplatten mit einer dekorativen Oberseite und einer Unterseite, wie beispielsweise Laminatfußbodenpaneele. Die Belagplatten sind dann zumindest an einer Längskante mit Kopplungsmitteln versehen, um Belagplatten miteinander verbinden zu können. Die Belagplatten sind mit elektrischen Heizmitteln versehen und die Belagplatten weisen geeignet ausgebildete elektrische Kontaktmittel auf, die eine elektrische Verbindung zwischen den elektrischen Heiz-mitteln von zwei und mehr Belagplatten erlauben. Die elektrischen Heizmittel sind an der Unterseite der Belagplatten angeordnet, d.h. in dem Raum zwischen den Belagplatten und dem Boden oder der Wand, der mit den Platten bedeckt werden soll. Um eine möglichst einfache elektrische Verbindung zwischen zwei Platten zu ermöglichen ist es vorgesehen, dass die elektrischen Kontaktmittel zumindest teilweise an den Kopplungsmitteln der Platten angeordnet sind, so dass durch ineinanderfügen entsprechender Kopplungsmittel zweier Platten auch eine elektrische Verbindung zwischen den elektrischen Heizmitteln dieser Platten herstellbar ist.

In einer bevorzugten Ausführungsform sind die Kopplungsmittel aus Nut- und Federelementen gebildet. Die Nut- und Federelemente sind komplimenär zueinander ausgebildet, so dass eine Feder an der Längskante einer ersten Belagplatte in eine entsprechend ausgebildetete Nut an der Längskante einer zweiten Belagplatte eingesetzt werden kann. Um mehrere Belagplatten miteinander verbinden zu können, sind die Kopplungsmittel vorzugsweise zumindest an zwei gegenüberliegenden Längsseiten der Belagplatten vorgesehen, wobei insbesondere immer eine Nut einer Feder gegenüberliegt. Die Kopplungsmittel erstrecken sich bevorzugt über die gesamte Länge einer Längsseite.

Um einen guten elektrischen Kontakt zu erreichen, erstrecken sich die elektrischen Kontaktmittel vorzugsweise über im Wesentlichen die gesamte Länge der Kopplungsmittel. Auf diese Weise ist es möglich die Belagplatten auf eine beliebige Länge zu kürzen, um sie den räumlichen Verlegeanforderungen anzupassen, ohne dass die elektrische Kontaktmöglichkeit verloren geht.

Die Kontaktmittel bestehen beispielsweise aus streifenartigen elektrisch leitenden Elementen. Sie können zum Bespiel aus einer elektrisch leitenden Metallfolie bestehen, die bespielweise aus Kupfer, Aluminium oder Edelstahl besteht. In einer weiteren beispielhaften Ausführungsform besteht die elektrisch leitende Folie aus verzinntem Kupferband.

Zur Befestigung der Kontaktmittel auf den Kopplungsmitteln können diese beispielsweise auf die Kopplungsmittel gepresst und / oder geklebt werden. Der verwendete Klebstoff ist vorteilhafterweise elektrisch leitend. Wenn die Kontaktmitteln aus streifenartigen elektrisch leitenden Elementen bestehen, werden diese vorzugsweise so auf die Kopplungsmittel aufgepresst, dass sie über Formschluss an den Kopplungsmitteln befestigt werden. Wenn die Kopplungsmittel aus komplementär ausgebildeten Nut- und Federelementen bestehen, können die streifenartigen Elemente beispielsweise um die Spitze der Feder herum gelegt bzw. gebogen oder gepresst werden. Eine vorteilhafte Klebeverbindung kann bespielweise durch ein Klebeband realisiert werden, dass vorzugsweise beidseitig klebend ist. Auf diese Weise kann das Aufkleben der Kontaktmittel auf die Kopplungsmittel erleichtert werden, in dem zum Beispiel das Klebeband zu erst an den Kontaktmitteln, wie zum Beispiel einer elektrisch leitenden Metallfolie, aufgeklebt wird, und anschließend der Verbund aus Kontaktmittel und Klebeband auf den Kopplungsmitteln angeordnet und festgeklebt wird. Selbstverständlich ist es auch hier möglich das Kontaktmittel zusätzlich mit den Kopplungsmittel zu verpressen, um eine noch bessere Verbindung zwischen Kontaktmittel und Kopplungsmittel zu erreichen.

In einer besonders vorteilhaften Ausführungsform bestehen die Kopplungsmittel aus komplementär ausgebildeten Nut- und Federelementen und die Kontaktmittel aus elektrisch leitenden Metallfolien. Die Innenseiten der unteren Flanken der Nutelemente sind dabei zumindest teilweise von einer elektrisch leitenden Metall-folie bedeckt. Bei den Federelementen sind zumindest teilweise die unteren Seiten der Federelemente mit einer Metallfolie bedeckt. Wenn nun zwei Belagplatten mit komplementär ausgebildeten Nut- und Federelementen mechanisch miteinander verbunden werden, indem die Feder der einen Belagplatte in die Nut der anderen Belagplatte eingeführt wird, so wird auf diese Weise gleichzeitig und ohne zusätzlichen Aufwand eine elektrische Verbindung zwischen den zwei Belagplatten erreicht. Sobald die Feder einer Belagplatte in die komplementär ausgebildete Nut einer weiteren Belagplatte eingefügt wird, wird nämlich automatisch und gleichzeitig die elektrische Verbindung über die elektrisch leitenden Metallfolien hergestellt, die sich innerhalb der Nut der einen Platte und zumindest teilweise auf der Feder der anderen Platte befinden.

Ein weiterer Aspekt betrifft elektrische Heizmittel für Belagplatten, die insbesondere gut mit den oben offenbarten Kontaktmitteln zusammenwirken können. Die Heizmittel können jedoch auch mit anderen, herkömmlichen Kontaktmitteln zusammenwirken. Die elektrischen Heizmitttel der Belagplatten bestehen vorzugsweise aus einer Flächenheizung. Diese ist an der der Unterseite der Belagplatten angeordnet. Wenn hier im Folgenden von Unterseite der Belagplatte die Rede ist, sollte es klar sein, dass dies nicht zwangsläufig bedeutet, dass die elektrischen Heizmittel als einzige Schicht an Unter seite der Belagplatte angeordnet sind oder das sie direkt an Unter angeordnet sein müssen. Vielmehr können weitere Schichten, insbesondere Schichten zur Trittschalldämmung oder Schichten zur thermischen Isolierung an der Unterseite, vorgesehen sein.

Die elektrische Flächenheizung besteht vorteilhafterweise aus einer elektrisch leitenden Dünnschicht. Diese kann beispielsweise gemäß einem nicht erfindungsgemäßen Beispiel aus elektrischen Widerstandsdrähten aufgebaut sein. Die Widerstandsdrähte können beispielsweise in Form eines Gewebes aus dünnen leitenden Kupferdrähten bestehen, die sich bei entsprechender elektrischer Beaufschlagung erwärmen.

In einer erfindungsgemäßen Ausführungsform besteht die elektrische Flächenheizung aus einer elektrisch leitenden Beschichtung. Die elektrische Flächenheizung kann beispielsweise mittels Sprühlackierung, Rollenbeschichtung, Rakelbeschichtung, Siebdruckbeschichtung oder Injet-Beschichtung oder einer Kombination dieser Verfahren aufgetragen werden. Die elektrisch leitende Beschichtung ist aus einem Fluid gebildet, das nach Auftragung auf die Belagplatten austrockenbar ist. In einer bevorzugten Ausführungsform besteht das elektrisch leitende Fluid aus Graphitlack oder Karbonlack. Derartige Lacke können kommerziell zum Beispiel von der Firma CRC Industries GmbH, Deutschland bezogen werden. Ebenso ist es beispielsweise möglich das Fluid mit Karbon- oder Graphitteilchen zu versehen, um die elektrische Leitfähigkeit zu verstärken und / oder um das Fluid elektrisch leitfähig zu machen. In einer weiteren vorteilhaften Ausführungsform enthält das Fluid nanoskalige, elektrisch leitfähige Teilchen oder sogenannte Multiwalled Carbon Nano Tubes.

Die Energieversorgung sollte mit einer Wechselspannung von kleiner als 42 V erfolgen, insbesondere mit einer Spannung von 38 Volt. Dabei ist die elektrische Leistungsaufnahme vorzugsweise nicht größer als 120 Watt pro m². Ein Belagsystem, welches mit den elektrischen Heizmitteln versehen ist, ist vorzugsweise mit einer automatischen Temperaturregelung ausgestattet. Die Temperaturregelung hält dabei die Oberflächentemperatur der Belagplatte im Bereich von 18°C bis 32°C.

Bei den Belagplatten kann es sich zum Beispiel um Laminatplatten, Funierplatten oder Parkettplatten handeln. Derartige Belagplatten werden vorzugsweise für Fußböden verwendet und sind kommerziell in einer Vielfalt von Ausführungsformen, Qualitäten und Größen erhältlich.

Um die Effektivität eines Belagsystems mit den offenbarten elektrischen Heizmitteln zu erhöhen, ist unterhalb der Heizmittel vorzugweise eine Isolierlage zur Wärmedämmung angeordnet. Die Isolierlage zur Wärmedämmung besteht zum Beispiel aus einem elektrisch nicht leitenden Fließ. Als Material für die wärmendämmende Isolierlage sind praktisch alle wärmedämmenden Materialien geeignet, die üblicherweise im Innenausbau und bei der Verlegung von Fußböden verwendet werden. Dabei sind auch elektrisch leitende Materialien denkbar, die dann jedoch in geeigneter Weise von dem Heizsystem und elektrischen Kontaktmitteln elektrisch isoliert sein müssen. Dies kann zum Beispiel durch eine weitere elektrisch nicht leitende Schicht geschehen, die zwischen Isolierlage und eventuell angrenzenden elektrischen Kontaktmitteln oder elektrischen Heizmitteln angeordnet wird. In einer beispielhaften Ausführungsform ist unterhalb der Heizmittel eine Isolierlage zur Wärmedämmung angeordnet, die aus einem elektrisch nicht leitenden Non-woven Flies mit mehr als 1mm Dicke besteht.

Die elektrische Heizung sollte einen Flächenwiderstand von 100 bis 500 Watt pro m² , insbesondere 250 bis 300 Watt pro m² aufweisen. Dies gilt insbesondere für die zuvor erwärmten elektrisch betriebenen Flächenheizungen aus elektrisch leitenden dünnen Schichten, wie zum Beispiel Schichten aus Widerstandsdrähten oder aus elektrisch leitenden Beschichtungen, wie zum Beispiel Graphitlack oder Karbonlack.

In einer vorteilhaften Ausführungsform sind die Unterseiten der Belagplatten mit einer schallabsorbierenden Schicht versehen. Aus dem Bereich der Laminat-, Furnier- und Parkettböden sind dem Fachmann hierfür eine Reihe von schallabsorbierenden Materialien und Verlegverfahren bekannt. Die schallabsorbierende Schicht kann dabei zum Beispiel zwischen der Unterseite der Belagplatte und der elektrischen Heizschicht angeordnet sein. In einer vorteilhaften Weiterbildung umfasst die Belagplatte sowohl eine schallabsorbierende Schicht als auch eine wärmeisolierende Schicht. Von der Unterseite der Belagplatte ausgehend weist diese dann vorteilhaft folgendes Schichtsystem auf: eine schallabsorbierende Schicht; eine elektrische Flächenheizung und eine wärmeisolierende Schicht.

Im Folgenden wird nun eine detaillierte Beschreibung der Figuren gegeben.
Figur 1 zeigt eine schematische Querschnittansicht einer Belagplatte;
Figur 2 zeigt eine schematische Querschnittsansicht einer Belagplatte mit einer zusätzlichen Isolierschicht;
Figur 3 zeigt eine schematische Querschnittsansicht einer Belagplatte mit einer Reihe von weiteren Schichten;
Figur 4 ist eine schematische Darstellung des Schichtaufbaus einer nicht erfindungsgemäßen Ausführungsform einer Belagplatte;
Figur 5 ist eine schematische Darstellung eines Belagsystems;
Figur 6 ist eine weitere schematische Darstellung eines Belagsystems; und
Figur 7 ist eine schematische Darstellung eines alternativen elektrischen Kontaktmittels.

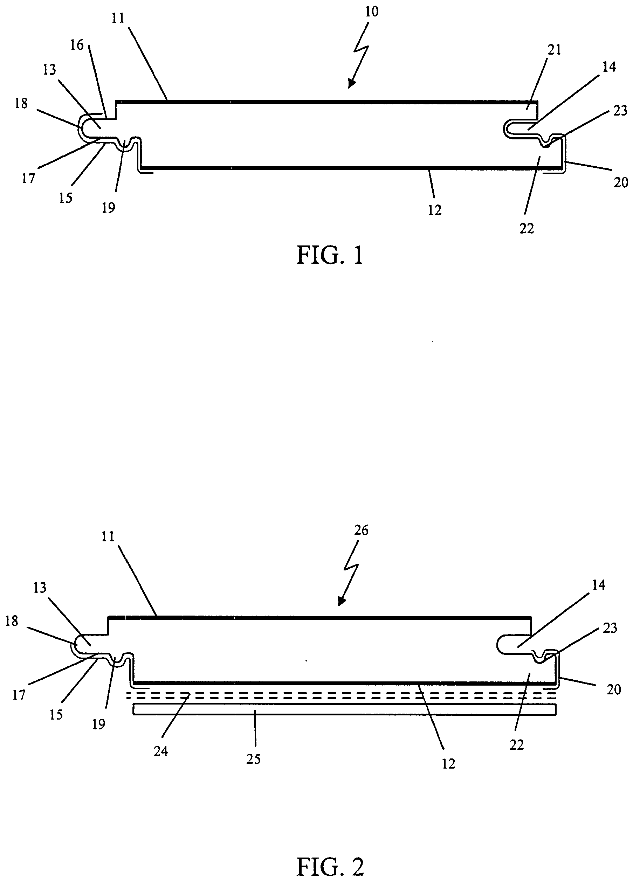

In Figur 1 ist eine schematische Querschnittsansicht einer beispielhaften Belagplatte 10 gezeigt, die zur Verwendung in einem Belagsystem vorgesehen ist. Die beispielhafte Belagplatte 10 der Figuren 1 bis 3 ist ein Laminatpaneel für einen Fußboden. Derartige Laminatpaneele haben im Allgemeinen eine rechteckige Form, wobei die beiden Längskanten mit Nut- und Federverbindungselementen versehen sind. Die kurzen Querseiten einer derartigen Belagplatte können ebenfalls mit ähnlichen oder auch anderen Kopplungsmitteln versehen sein. Auf diese Weise sind alle vier Kanten der Belagplatte mit Kopplungsmitteln versehen, sodass diese in einem Belagssystem an allen vier Seiten mit weiteren Belagplatten verbunden werden kann, um so eine größere Fläche abdecken zu können. Die Belagplatte 10 hat eine Oberseite 11 und eine Unterseite 12. Die Oberseite 11 kann mit weiteren Schichten aus unterschiedlichen Materialien bedeckt sein. Im Falle eines Laminatpaneels ist dies üblicherweise mindestens eine Dekorschicht bestehend aus einem bedruckten Spezialpapier und einer darüber angeordneten Overlay-Schicht, die besonders abriebfest ist und als Schutzschicht dient. An der Unterseite 12 können ebenfalls weitere Schichten angeordnet sein, wie zum Beispiel Schichten zur Schalldämmung oder Schichten zur Wärmeisolierung. An den beiden Längsseiten der Belagplatte 10 sind Kopplungsmittel in der Form von Feder 13 und Nut 14 eingerichtet. Feder und Nut sind komplementär zueinander ausgebildet, so dass, wenn zwei Belagplatten 10 miteinander verbunden werden sollen, eine Feder 13 der einen Belagplatte in eine Nut 14 der anderen Belagplatte eingeführt werden kann. Die dargestellte Ausbildung von Feder und Nut ist rein exemplarisch und es sind aus dem Stand der Technik eine Vielzahl von verschiedenen Feder- und Nutformen bekannt, die ebenfalls mit der vorliegenden Erfindung zusammenwirken können.

In der in Figur 1 gezeigten Ausführungsform ist die Feder 13 mit einem Kontaktmittel 15 versehen. Das Kontaktmittel 15 verläuft, der Kontur der Feder folgend, von der Oberseite 16 der Feder um die Spitze 18 der Feder herum über die untere Seite 17 der Feder bis zur Unterseite 12 der Belagplatte 10. Das Kontaktmittel 15 ist beispielsweise ein dünner Streifen eines elektrisch leitfähigen Materials, wie zum Beispiel ein dünner Kupferstreifen. Der Streifen ist bevorzugt so dünn bzw. flexible, dass er ohne großen Aufwand um die Kontur der Feder oder der Nut herum gebogen werden kann. Der Streifen 15 erstreckt sich vorzugsweise über die gesamte Länge der Feder, d.h. über die gesamte Länge der Längsseite der Belagplatte, wenn sich die Feder über die gesamte Länge erstreckt.

Die Feder 13 ist an ihrer unteren Seite 17 mit einem Verriegelungsvorsprung 19 versehen, der sich vorzugsweise über die gesamte Länge der Feder und damit über die gesamte Länge der Längskante der Belagplatte 10 erstreckt. Die komplementär ausgebildete Nut 14 auf der gegenüberliegenden Seite der Belagplatte 10 weist eine obere Flanke 21 auf und eine untere Flanke 22. In der unteren Flanke 22 verläuft eine Verriegelungsnut 23, vorzugsweise ebenfalls über die gesamte Länge der unteren Flanke 22. Wie aus Figur 1 zu erkennen ist, ist die untere Flanke 22 etwas länger als die obere Flanke 21. Auf diese Weise wird das Einführen der Feder 13 in die Nut 14 erleichtert, wenn zwei Belagplatten 10 mit komplementär ausgebildeten Nut- und Federelementen miteinander verbunden werden. Beim Einführen der Feder in die Nut wird der Verriegelungsvorsprung 19 in die vorzugsweise komplementär ausgebildete Verriegelungsnut 23 in der unteren Flanke 22 der Nut 14 eingepresst. Auf diese Weise können zwei geeignet ausgebildete Belagplatten besonders sicher miteinander verbunden werden. Da sich, wie abgebildet, die Kontaktmittel 15 bzw. 20 an den Kopplungsmitteln, d.h. der Feder sowie der Nut, befinden, wird beim mechanischen Verbinden zweier Belagplatten automatisch auch eine elektrische Verbindung zwischen den elektrischen Kontaktmitteln 15 und 20 hergestellt. Da die Kontaktmittel wiederum in elektrischer Verbindung mit geeigneten elektrischen Heizmitteln stehen, die an Ober- oder Unterseite der Belagplatten angeordnet sind, wie es im Folgenden erläuterte werden wird, entsteht so auf einfache Weise auch eine elektrische Verbindung zwischen den elektrischen Heizmitteln. Es sind also keine zusätzlichen Handgriffe oder Werkzeuge nötig, um zusätzlich zu der mechanischen Verriegelung zweier Belagplatten auch den elektrischen Kontakt zwischen diesen Platten herzustellen. Ein derartig ausgebildetes Belagsystem kann daher auch von einem Laien verlegt werden.

In Figur 2 ist eine weitere Ausführungsform einer Belagplatte 26 schematisch im Querschnitt dargestellt. Gleiche oder ähnliche Bestandteile werden hier und in den folgenden Figuren mit demselben Bezugszeichen versehen. Die Feder 13 weist elektrische Kontaktmittel 15 in der Form eines dünnen Kontaktstreifens auf, der sich an der Unterseite der Feder 13 befindet und sich bis zur Unterseite der Belagplatte 26 erstreckt. Die untere Flanke der Nut 14 ist mit einem weiteren Kontaktmittel 20 versehen, dass sich ebenfalls bis zur Unterseite der Belagplatte 26 erstreckt. In der Ausführungsform von Figur 2 bedecken die Kontaktmittel die Kopplungsmittel, d.h. Feder und Nut, nur teilweise. Wie aus Figur 2 jedoch klar zu erkennen ist, wird trotzdem eine elektrische Verbindung zwischen zwei Belagplatten hergestellt, wenn die Feder 15 einer Belagplatte in eine komplementär ausgebildete Nut 14 einer weiteren Belagplatte eingesetzt wird, da im vorliegenden Fall zumindest der Verriegelungsvorsprung an der Feder und die VerriegelungsNut in der unteren Flanke der Nut 14 von den Kontaktmitteln bedeckt sind. An der Unterseite der Belagplatte 26 befindet sich ein elektrisches Heizmittel 24, dass in Kontakt mir den Kontaktmitteln 15, 20 ist.

Im vorliegenden Fall besteht das elektrische Heizmittel aus einer elektrischen Flächenheizung. Diese kann zum Beispiel aus einer elektrisch leitenden Dünnschicht bestehen, die aus elektrischen Widerstandsdrähten aufgebaut ist, die in einem Trägerfließ eingewoben sind. Die elektrische Flächenheizung kann jedoch auch aus einer elektrisch leitenden Beschichtung bestehen, wie zum Beispiel einer Beschichtung aus Graphitlack oder Karbonlack oder einer Mischung davon. Elektrisch leitende Beschichtungen können beispielsweise aus einem Fluid bestehen, das, nachdem die Belagplatten mit den elektrischen Kontaktmitteln versehen wurden, auf die Unterseite der Belagplatte aufgetragen wird. Dies kann beispielsweise mittels einer Sprühlackierung, Rollenbeschichtung, Rackelbeschichtung, Siebdruckbeschichtung oder Ink-Jet-Beschichtung oder auch einer Kombination dieser Verfahren geschehen. Um die elektrische Leitfähigkeit eines solchen Fluids zu erhöhen, kann dieses mit Karbon oder Grafitteilchen versehen werden. Unterhalb des Heizmittels 24 befindet sich eine optionale Wärmedämmungsschicht 25, die beispielsweise aus einem elektrisch nicht leitenden Fließ bestehen kann. Um eine gute Verbindung der Schichten zu ermöglichen, kann diese wärmeisolierende Schicht beispielsweise mit der elektrischen Flächenheizung 24 verklebt oder verleimt werden. Der oben beschriebene Aufbau des Heizmittels kann selbstverständlich auch mit anderen bzw. konventionellen Kontaktmitteln mit Strom versorgt werden, wobei die hier beschriebenen Kontaktmittel jedoch bevorzugt sind.

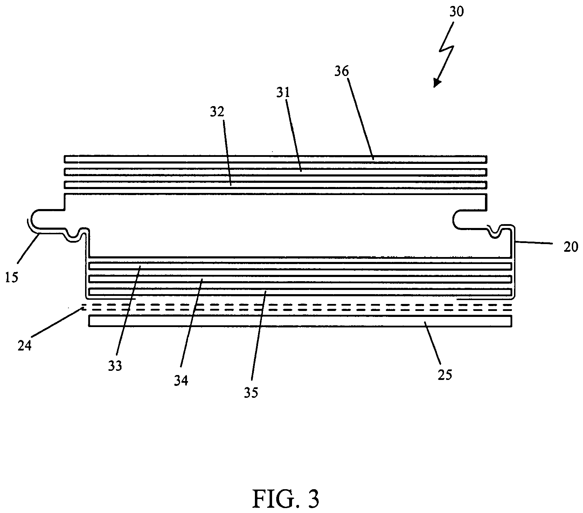

In Figur 3 ist eine schematische Querschnittsansicht noch einer weiteren Ausführungsform einer Belagplatte 30 abgebildet. An der Oberseite der Belagplatte 30 sind schematisch drei Schichten angedeutet. Die oberste Schicht besteht aus einem Overlay 36, beispielsweise einem Papier, das mit einem Phenolharz and abriebfesten Partikeln, wie zum Beispiel Korundpartikeln, versehen ist und als Schutzschicht dient. Die mittlere Schicht ist eine Dekorlage 31, wie sie typischerweise bei Laminatpaneelen verwendet wird, um Paneelen das Aussehen eines Echtholzparketts zu geben. Darunter befindet sich eine obere Kernlage 32. Auch an der Unterseite der Belagplatte 30 befindet sich ein Schichtsystem. Die erste Schicht an der Unterseite der Belagplatte 30 ist eine untere Kernlage 33. Darunter befindet sich ein Gegenzugpapier 34, das einen Verzug des Laminatpaneels, d.h. der Belagplatte 30, verhindern soll. Darunter befindet sich eine Schallabsorbtionsschicht 35 von typischerweise 0,3 mm Dicke. Die elektrischen Kontaktmittel 15 und 20 erstrecken sich teilweise über die Unterseite der Belagplatte 30 und liegen teilweise auf der Schallschutzschicht 35. Unterhalb der Schallschutzschicht 35 ist wieder ein elektrisches Heizmittel in der Form einer Flächenheizung 24 angeordnet. Aus Figur 3 ist gut zu erkennen, wie die Enden der Kontaktmittel 15, 20 in Kontakt mit der Flächenheizung 24 sind. Unterhalb der Flächenheizung 24 ist ähnlich wie in Figur 2 eine optionale Wärmedämmungsschicht 25 angeordnet. Es ist dem Fachmann selbstverständlich klar, dass alle Schichten üblicherweise fest miteinander verbunden sind, um so eine Belagplatte mit einer Dicke von wenigen Millimetern zu bilden.

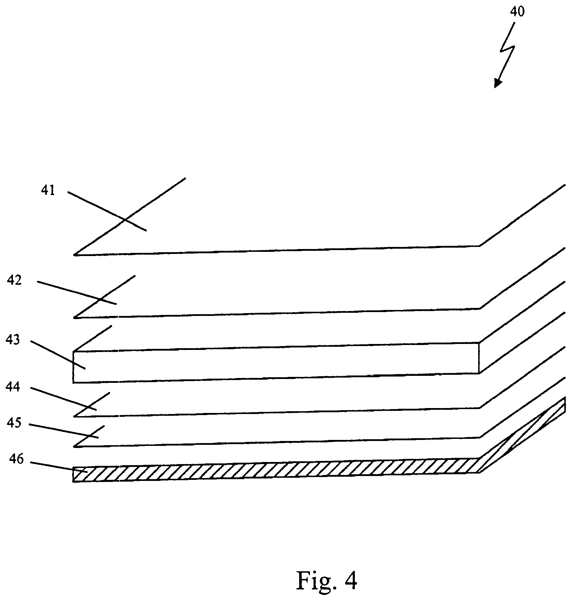

In Figur 4 ist schematisch der Aufbau eines nicht erfindungsgemäßen Laminatpaneels 40 gezeigt. Mit dem Bezugszeichen 43 ist eine Trägerplatte aus beispielsweise HDF oder MDF Material gekennzeichnet, die den eigentlichen strukturellen Kern des Laminatpaneels 40 bildet. Die oberste Schicht wird aus einem Overlay bzw. Dekorpapier 41 gebildet. Darunter ist ein Heizmittel in der Form einer elektrischen Flächenheizung 42 angeordnet, d.h. zwischen HDF-Trägerplatte und dem Overlay bzw. Dekorpapier 41. Unterhalb der Trägerplatte 43 ist eine Kernlage aus Natronpapier 44 angeordnet. Darunter befindet sich wieder ein Gegenzugpapier 45 und darunter eine Schallabsorbtionsschicht 46. Wie es dem Fachmann sofort klar sein wird, können die elektrischen Kontaktmittel auch ein derartiges Laminatpaneel elektrisch verbinden, bei dem die Heizmittel 42 auf der Oberseite des Paneels angeordnet sind. Zu diesem Zweck müssen die Kontaktmittel wie sie in Figur 1 abgebildet sind lediglich bis zur Oberseite der Belagplatte weiter geführt werden, so dass sie in Kontakt mit dem Heizmittel sind. In diesem Fall ist es dann jedoch nicht notwendig, dass sich die Kontaktmittel bis zur Unterseite der Belagplatte erstrecken.

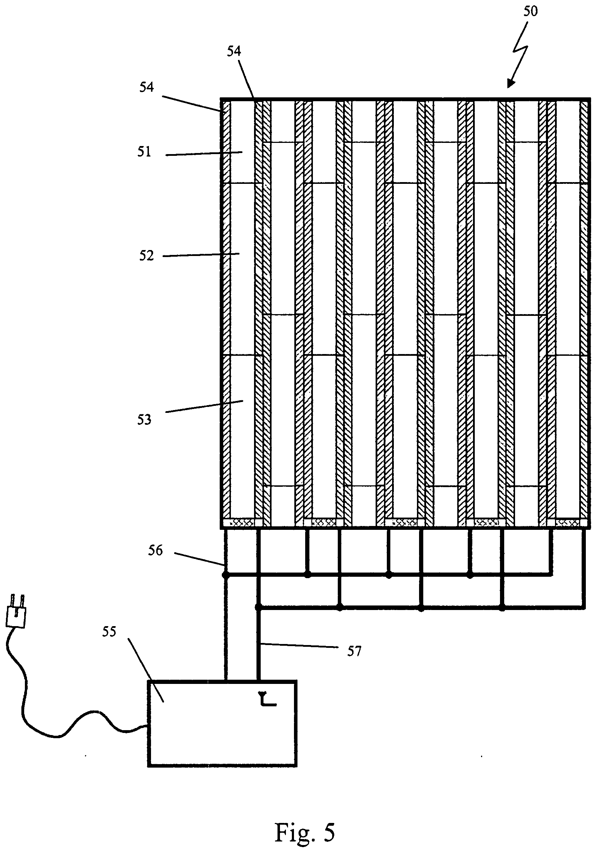

In Figur 5 ist schematisch ein beheizbares Belagsystem 50 dargestellt. Das Belagsystem 50 besteht aus einer Anzahl von Belagplatten, wie zum Beispiel den Belagplatten 51, 52 und 53. Wie aus Figur 5 zu erkennen ist, sind die Belagplatten an ihren Rändern mit elektrischen Kontaktmittel 54 versehen, die sich im Wesentlichen über die gesamte Längsseite der Belagplatten erstrecken. Wie gut zu erkennen ist, sind einige der Belagplatten kürzer als andere, um das Belagsystem in seiner Form den jeweiligen Begebenheiten in zum Beispiel einem Raum, in dem das Belagssystem verlegt werden soll, anzupassen. Da sich die elektrischen Kontaktmittel über die gesamte Längsseite der Belagplatten erstreckt, können die Belagplatten einfach zurechtgeschnitten werden, ohne dass dies negative Auswirkungen auf die elektrische Verbindbarkeit der Platten hat. Mit Bezugszeichen 55 ist ein Elektromodul angedeutet, dass die elektrische Stromversorgung für das beheizbare Belagsystem 50 bereitstellt. Ein derartiges erfindungsgemäßes Belagsystem hat unter anderem den Vorteil, dass es aufgrund der einfachen elektrischen Verbindbarkeit der elektrischen Heizmittel auch von einem Laien verlegt werden kann.

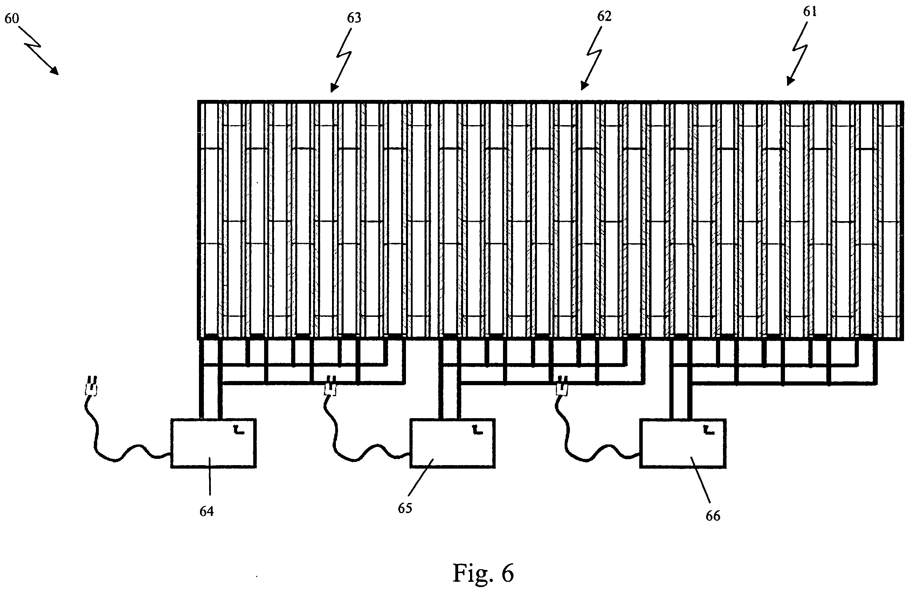

In Figur 6 ist ein Belagsystem 60 dargestellt, dass aus einer Anzahl von drei separaten Belagssystemen 61, 62 und 63 aufgebaut ist, die jeweils über eine eigene Stromversorgung 64, 65 bzw. 66 verfügen. Der modulare Aufbau des Belagssystems 60 erlaubt die Verwendung von mehreren kleineren Stromversorgungsgeräten 64, 65, 66, anstelle eines einzelnen großen Geräts. Auf diese Weise können Trenntransformatoren mit einer typischen Leistung von einigen 100 Watt, beispielsweise 700 Watt verwendet werden, die auch von Laien ohne besondere Ausbildung angeschlossen bzw. installiert werden können. Bei einer typischen Flächenleistung von einigen 10 Watt pro m² bis zu etwa 100 Watt pro m² können mit einem solchen Kleintransformator zum Beispiel 10 m² Fläche versorgt werden. Außerdem können die Stromversorgungsgeräte mit einer Fernbedienung und / oder mit Temperatursensoren ausgestattet werden, um den Betrieb und die Anhabung des beheizbaren Belagssystems zu erleichtern.

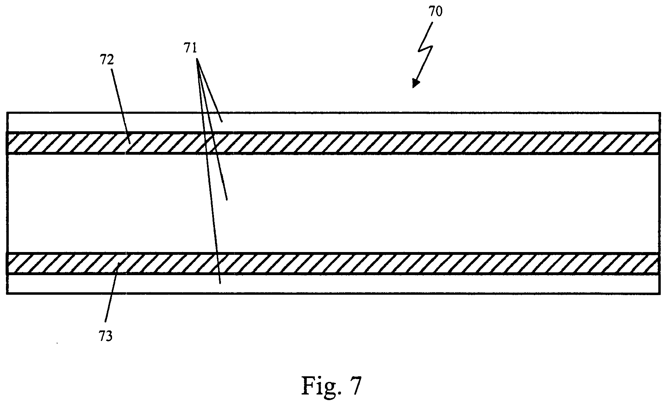

In Figur 7 ist eine schematische Darstellung eines alternativen elektrischen Kontaktmittels dargestellt. Figur 7 zeigt schematische eine Belagplatte 70 von ihrer Unterseite gesehen. Die Belagplatte 70 ist mit einer elektrischen Flächenheizung 71 versehen, die gemäß den oben offenbarte elektrischen Heizmitteln ausgebildet ist. Die elektrische Flächenheizung 71 ist beispielsweise eine dünne Schicht eines elektrisch leitfähigen Graphit- oder Karbonlacks. Auf der Flächenheizung 71 sind zwei elektrische Kontaktmittel 72 und 73 angeordnet. Die Kontaktmittel 72 und 73 bestehen beispielsweise aus einem dünnen leitfähigen Metallstreifen, der fest mit der elektrischen Flächenheizung 71 verbunden, beispielsweise verklebt ist. Auch auf diese alternative Weise können die hierin beschriebenen elektrischen Heizmittel mit Strom versorgt werden. Dem Fachmann ist es jedoch klar, dass es noch weitere Alternativen geben wird, die ebenfalls mit den elektrischen Heizmitteln zusammenwirken können.

In Perioden, in denen nicht geheizt wird, kann ein Wechselstromsystem in sehr niedriger Leistung oder intervallmäßig betrieben werden, wodurch Korrosionseffekte aufgrund von Feuchtigkeit oder galvanischer Potentialdifferenzen in elektrisch leitenden Kontaktmitteln vermieden werden können. Diese Art des vorbeugenden Schutzes ist insbesondere beim Betrieb mit Gleichstrom zu empfehlen.

Die Anbringung der elektrischen Kontaktmittel auf den Kopplungsmitteln kann auf verschiedene Weise erfolgen. Beispielsweise können Kontaktstreifen aus dünnem Kupfer oder Aluminium oder Edelstahl verwendet werden, die mit einer Klebebeschichtung versehen sind, die vorzugsweis elektrisch leitende Eigenschaften aufweist. Dabei kann zuerst die Flächenheizschicht aufgebracht werden und anschließend die elektrischen Kontaktmittel oder umgekehrt. Als Materialien für die elektrischen Kontaktmittel kommt zum Beispiel eine leitende Kupferfolie in Betracht, wie zum Beispiel das "Conductor Copper Fuel Tape" VE 1691 der Firma D&M International, A-8451 Heimschuh. Weitere Materialien sind zum Beispiel von der Firma 3M Electrical Products Division, Austin, Texas, USA erhältlich, wie zum Beispiel der Typ 1183.

In einer alternativen Herstellungsweise wird zum Beispiel auf die Unterseite eines Laminatpaneels am Rand in Längsrichtung eine elektrisch leitende dünne Folie, wie zum Beispiel eine Kupfer- oder Aluminium- oder Edelstahlfolie mit Wahlweise einer geeigneten Oberflächenbeschichtung appliziert. Anschließend wird die dünne Folie an oder auch um die Kopplungsmittel gepresst. Die Pressung erfolgt vorzugsweise so, dass keine Stufe am Übergang zwischen Folie und Plattenoberfläche gegeben ist. Anschließend kann ein Flächenheizelement auf die Unterseite der Platte aufgebracht werden, wobei das Flächenheizelement in Kontakt mit zumindest einem Teil der Folie gerät. Der elektrische Kontakt zwischen Folie und Heizmittel kann durch eine zusätzliche Anpressung verbessert werden. Die Kontaktstreifen können zusätzlich verzinnt oder vernickelt ausgeführt werden.

Das elektrische Heizmittel kann in der Form einer elektrisch leitfähigen Paste bzw. Farbe oder Lack mit geeigneter Viskosität und Trocknungseigenschaften verwendet werden. Beispielsweise können Karbon oder Graphitpigmente mit einer polymeren Matrix verwendet werden. Da eine derartige Heizschicht selbst nur wenige Mikrometer dick ist, spielen unterschiedliche Wärmeausdehnungen zwischen Heizschicht und den übrigen Komponenten der Belagplatte kaum eine Rolle.

Die hierin beschriebenen elektrischen Heizmittel sind besonders gut geeignet, um mit den offenbarten Kontaktmitteln zusammenzuwirken. Selbstverständlich ist es jedoch auch möglich die Heizmittel über konventionelle elektrische Anschlussmittel mit Strom zu versorgen, so dass die hierin beschriebenen elektrischen Heizmittel unabhängig von den beschriebenen Kontaktmitteln verwendet werden können.

## Patentansprüche

1. Beheizbares Belagsystem für Fußböden, Decke und Wände, umfassend
- Belagplatten (10) mit einer dekorativen Oberseite (11) und einer Unterseite (12); wobei
- die Belagplatten (10) an zumindest einer Längskante mit Kopplungsmitteln (13, 14) versehen sind, um Belagplatten miteinander verbinden zu können, und wobei
- die Belagplatten (10) mit elektrischen Heizmitteln (24) versehen sind und die Belagplatten elektrische Kontaktmittel (15) aufweisen, um Platten (10) elektrisch miteinander zu verbinden, wobei die elektrischen Kontaktmittel (15) zumindest teilweise an den Kopplungsmitteln (13, 14) angeordnet sind, so dass durch Ineinanderfügen entsprechender Kopplungsmittel (13, 14) zweier Platten eine elektrische Verbindung zwischen diesen Platten herstellbar ist,
- **dadurch gekennzeichnet, dass** die elektrischen Heizmittel (24) aus einer Flächenheizung aus einer elektrisch leitenden Beschichtung bestehen, wobei die elektrisch leitende Beschichtung aus einem Fluid besteht, welches im feuchten Zustand auf die Belagplatten aufgetragen wird und anschließend ausgetrocknet wird, wobei die elektrischen Heizmittel (24) an der Unterseite (12) der Belagplatten (10) angeordnet sind.

2. Beheizbares Belagsystem nach Anspruch 1, **dadurch gekennzeichnet, dass** die Kopplungsmittel (13, 14) aus komplementär ausgebildeten Nut- und FederElementen bestehen.

3. Beheizbares Belagsystem nach einem der Ansprüche 1 bis 2, **dadurch gekennzeichnet, dass** die Kopplungsmittel (13, 14) zumindest an zwei gegenüberliegenden Längsseiten der Belagplatten (10) vorgesehen sind.

4. Beheizbares Belagsystem nach einem der vorhergehenden Ansprüche, **dadurch gekennzeichnet, dass** sich die Kontaktmittel (15) über im Wesentlichen die gesamte Länge der Kopplungsmittel (13, 14) erstrecken.

5. Beheizbares Belagsystem nach einem der vorhergehenden Ansprüche, **dadurch gekennzeichnet, dass** die Kontaktmittel (15) aus streifenartigen elektrisch leitenden Elementen bestehen.

6. Beheizbares Belagsystem nach Anspruch 5, **dadurch gekennzeichnet, dass** die Kontaktmittel (15) aus einer elektrisch leitenden Metallfolie bestehen, vorzugsweise aus Kupfer, Aluminium oder Edelstahl und besonders bevorzugt aus einem verzinnten Kupferband.

7. Beheizbares Belagsystem nach einem der vorhergehenden Ansprüche, **dadurch gekennzeichnet, dass** die Kontaktmittel (15) auf die Kopplungsmittel (13, 14) gepresst und/oder aufgeklebt sind.

8. Beheizbares Belagsystem nach einem der vorhergehenden Ansprüche, **dadurch gekennzeichnet, dass** die Kopplungsmittel (13, 14) aus komplementär ausgebildeten Nut- und Feder-Elementen und die Kontaktmittel (15) aus einer elektrisch leitenden Metallfolie bestehen, wobei Metallfolien zumindest teilweise die Innenseite der unteren Flanke der Nut und zumindest teilweise die untere Seite der Feder bedecken.

9. Beheizbares Belagsystem nach Anspruch 1, **dadurch gekennzeichnet, dass** die elektrischen Flächenheizung (24) aus einer elektrisch leitenden Dünnschicht besteht.

10. Beheizbares Belagsystem nach Anspruch 1 **dadurch gekennzeichnet, dass** die Beschichtung aus Graphitlack oder Carbonlack oder einer Mischung daraus besteht.

11. Beheizbares Belagsystem nach einem der Ansprüche 1 oder 10, **dadurch gekennzeichnet, dass** die elektrisch leitende Beschichtung mittels Sprühlackierung, Rollenbeschichtung, Rakelbeschichtung, Siebdruckbeschichtung oder InkJet-Beschichtung oder einer Kombination dieser Verfahren auftragbar ist.

12. Beheizbares Belagsystem nach einem der Ansprüche 1 oder 10 bis 11, **dadurch gekennzeichnet, dass** das Fluid mit Carbon oder Graphit-Teilchen versehen ist, um die elektrische Leitfähigkeit zu verstärken.

13. Beheizbares Belagsystem nach Anspruch 12, **dadurch gekennzeichnet, dass** das Fluid mit Carbon oder Graphit-Teilchen versehen ist, um das Fluid elektrisch leitfähig zu machen.

14. Beheizbares Belagsystem nach einem der Ansprüche 1 oder 10 bis 11, **dadurch gekennzeichnet, dass** das Fluid nanoskalige elektrisch leitfähige Teilchen oder Multi-Walled-Carbon-Nano-Tubes enthält.

15. Beheizbares Belagsystem nach einem der vorhergehenden Ansprüche, **dadurch gekennzeichnet, dass** die Belagplatten Laminatplatten, Furnierplatten oder Parkettplatten sind.

## Claims

1. Heatable covering system for floors, ceiling and walls comprising:
- covering panels (10) with a decorative top side (11) and a bottom side (12); wherein
- the covering panels (10) comprise at least on one longitudinal edge coupling means (13, 14) in order to join the covering panels to each other and wherein
- the covering panels (10) comprise electric heating means (24) and the covering panels have electric contacting means (15) in order to electrically connect the panels (10) with each other, wherein the electric contact means (15) are arranged at least partially at the coupling means (13, 14), so that by means of assembling of corresponding coupling means (13, 14) of two panels, an electrical connection between these panels is producible,
- **characterized in that** the electric heating means (24) consist of a panel heating of an electrically conducting coating, wherein the electrically conducting coating consists of a fluid which is applied in a wet condition on the covering panels and is dried subsequently, wherein the electric heating means (24) are arranged on the bottom side (12) of the covering panels (10).

2. Heatable covering system according to claim 1, **characterized in that** the coupling means (13, 14) consist of complementary built groove and tongue elements.

3. Heatable covering system according to one of the claims 1 to 2, **characterized in that** the coupling means (13, 14) are provided on at least two opposite longitudinal sides of the covering panels (10).

4. Heatable covering system according to any one of the preceding claims, **characterized in that** the contacting means (15) substantially extend over the full length of the coupling means (13, 14).

5. Heatable covering system according to any one of the preceding claims, **characterized in that** the contacting means (15) consist of strip-shaped electrically conducting elements.

6. Heatable covering system according to claim 5, **characterized in that** the contacting means (15) consist of an electrically conducting metal foil, preferably of copper, aluminum or high-grade steel, and in particular preferably of a tinned copper strip.

7. Heatable covering system according to any one of the preceding claims, **characterized in that** the contact means (15) are pressed and/or glued on the coupling means (13, 14).

8. Heatable covering system according to any one of the preceding claims, **characterized in that** the coupling means (13, 14) consist of complementary formed groove and tongue elements and **in that** the contacting means (15) consists of an electrically conductive metal foil, wherein the metal foils cover at least partially the inner surface of the lower flank of the groove and at least partially the lower side of the tongue.

9. Heatable covering system according to claim 1, **characterized in that** the electrical panel heating (24) consists of an electrically conducting thin film.

10. Heatable covering system according to claim 1, **characterized in that** the coating consists of graphite lacquer or carbon lacquer or a mixture thereof.

11. Heatable covering system according to any one of claims 1 or 10, **characterized in that** the electrically conducting coating is applicable by means of spray coating, coil coating, doctor blade coating, screen coating or ink jet coating or by a combination of these methods.

12. Heatable covering system according to any one of claims 1 or 10 to 11, **characterized in that** the fluid is provided with carbon or graphite particles in order to improve the electric conductivity.

13. Heatable covering system according to claim 12, **characterized in that** the fluid is provided with carbon or graphite particles in order to make the fluid electrically conducting.

14. Heatable covering system according to any one of claims 1 or 10 to 11, **characterized in that** the fluid comprises nano-scale electric conducting particles or multi-walled carbon nano-tubes.

15. Heatable covering system according to any one of the preceding claims, **characterized in that** the covering panels are laminate panels, vinyl panels or parquet flooring panels.

## Revendications

1. Système de revêtement chauffable pour des planchers, plafonds et murs, comprenant
- des plaques de revêtement (10) avec un côté supérieur décoratif (11) et un côté inférieur (12) ; dans lequel
- les plaques de revêtement (10) sont pourvues sur au moins une arête longitudinale de moyens de couplage (13, 14) afin de pouvoir relier des plaques de revêtement entre elles, et dans lequel
- les plaques de revêtement (10) sont pourvues de moyens de chauffage électriques (24) et les plaques de revêtement présentent des moyens de contact électriques (15) afin de relier des plaques (10) électriquement entre elles, dans lequel les moyens de contact (15) électriques sont agencés au moins en partie sur les moyens de couplage (13, 14) de sorte que par insertion de moyens de couplage correspondants (13, 14) de deux plaques, une liaison électrique entre ces deux plaques puisse être établie,
- **caractérisé en ce que** les moyens de chauffage électriques (24) se composent d'un chauffage de surface en un revêtement électroconducteur, dans lequel le revêtement électroconducteur se compose d'un fluide qui est appliqué à l'état humide sur les plaques de revêtement et est ensuite séché, dans lequel les moyens de chauffage électriques (24) sont agencés sur le côté inférieur (12) des plaques de revêtement (10).

2. Système de revêtement chauffable selon la revendication 1, **caractérisé en ce que** les moyens de couplage (13, 14) se composent d'éléments de languette et rainure réalisés de manière complémentaire.

3. Système de revêtement chauffable selon l'une quelconque des revendications 1 à 2, **caractérisé en ce que** les moyens de couplage (13, 14) sont prévus au moins sur deux côtés longitudinaux en regard des plaques de revêtement (10).

4. Système de revêtement chauffable selon l'une quelconque des revendications précédentes, **caractérisé en ce que** les moyens de contact (15) s'étendent sur sensiblement la longueur entière des moyens de couplage (13, 14).

5. Système de revêtement chauffable selon l'une quelconque des revendications précédentes, **caractérisé en ce que** les moyens de contact (15) se composent d'éléments électroconducteurs de type bande.

6. Système de revêtement chauffable selon la revendication 5, **caractérisé en ce que** les moyens de contact (15) se composent d'un film métallique électroconducteur, de préférence en cuivre, aluminium ou acier spécial et de manière particulièrement préférée en une bande de cuivre étamée.

7. Système de revêtement chauffable selon l'une quelconque des revendications précédentes, **caractérisé en ce que** les moyens de contact (15) sont pressés et/ou collés sur les moyens de couplage (13, 14).

8. Système de revêtement chauffable selon l'une quelconque des revendications précédentes, **caractérisé en ce que** les moyens de couplage (13, 14) se composent d'éléments de languette et rainure réalisés de manière complémentaire et les moyens de contact (15) se composent d'un film métallique électroconducteur, dans lequel des films métalliques recouvrent au moins en partie le côté inférieur du flanc inférieur de la languette et au moins en partie le côté inférieur de la rainure.

9. Système de revêtement chauffable selon la revendication 1, **caractérisé en ce que** le chauffage de surface électrique (24) se compose d'une couche mince électroconductrice.

10. Système de revêtement chauffable selon la revendication 1, **caractérisé en ce que** le revêtement se compose de vernis de graphite ou de vernis de carbone ou d'un mélange de ceux-ci.

11. Système de revêtement chauffable selon l'une quelconque des revendications 1 ou 10, **caractérisé en ce que** le revêtement électroconducteur peut être appliqué par vernissage par vaporisation, revêtement au rouleau, revêtement à la racle, revêtement par sérigraphie ou revêtement par jet d'encre ou une combinaison de ces procédés.

12. Système de revêtement chauffable selon l'une quelconque des revendications 1 ou 10 à 11, **caractérisé en ce que** le fluide est pourvu de carbone ou de particules de graphite afin de renforcer la conductivité électrique.

13. Système de revêtement chauffable selon la revendication 12, **caractérisé en ce que** le fluide est pourvu de carbone ou de particules de graphite afin de rendre le fluide électroconducteur.

14. Système de revêtement chauffable selon l'une quelconque des revendications 1 ou 10 à 11, **caractérisé en ce que** le fluide contient des particules électroconductrices nanométriques ou des nanotubes de carbone à multiparois.

15. Système de revêtement chauffable selon l'une quelconque des revendications précédentes, **caractérisé en ce que** les plaques de revêtement sont des plaques stratifiées, des plaques contreplaquées ou des plaques parquetées.
